# EUROPEAN PATENT SPECIFICATION

(11) **EP 0 876 711 B1**
(45) Date of publication and mention of the grant of the patent: **02.05.2001**
(21) Application number: 97903857.7
(22) Date of filing: 15.01.1997
(51) Int. Cl.: H04B 1/38, H01Q 1/24

(54) **ANTENNA SYSTEM FOR DUAL MODE SATELLITE/CELLULAR PORTABLE PHONE**
ANTENNENSYSTEM FÜR ZWEIMODEN-TELEFON FÜR SATELLITEN- UND ZELLULARGEBRAUCH
SYSTEME D'ANTENNE POUR TELEPHONES PORTABLES BIMODES CELLULAIRES/PAR SATELLITES

(30) Priority: 16.01.1996 US 586433
(43) Date of publication of application: 11.11.1998
(60) Divisional application: 00108094.4
(73) Proprietor: ERICSSON INC., Research Triangle Park, NC 27709 (US)
(72) Inventor: HASSAN, Amer, Cary, NC 27513 (US); REINHOLD, Stanley, L., Cary, NC 27511 (US); HAYES, Gerard, James, Wake Forest, NC 27587 (US); MacDONALD, James, D., Jr., Apex, NC 27502 (US); MA, Yawei, Raleigh, NC 27607 (US)
(74) Representative: O'Connell, David Christopher
(86) International application number: US9700846
(87) International publication number: WO9726714

(56) References cited:
- EP-A- 0 631 400
- EP-A- 0 644 607
- WO-A-97/03501
- US-A- 5 337 061
- US-A- 5 564 076

## Description

### BACKGROUND OF THE INVENTION

### 1. Field of the Invention

The present invention relates to a dual mode satellite/cellular portable phone and, more particularly, to an antenna system for a dual mode satellite/cellular portable phone.

### 2. Description of Related Art

Portable cellular phones are well known and have been utilized for the last several years. Such cellular phones typically transmit and receive signals at a frequency of approximately 900 Megahertz by means of an antenna designed for such purpose. Recently, however, it has become important for a second mode of communication, i.e., satellite, to be employed in areas where cellular towers or stations are not available. Satellite communication occurs at frequencies much higher than for cellular communication (i.e., 1.0-30.0 Gigahertz), and therefore requires an antenna designed for such purpose.

It is recognized that separate antennas are necessary for cellular and satellite modes of communication since cellular antennas are linearly polarized and satellite antennas are circularly polarized. A further difference is that the satellite communication mode involves a directional component, where link margin is increased when the satellite antenna is pointed toward the satellite, and the cellular communication mode does not. Thus, the positioning of the satellite antenna in the portable phone is very important, as is the construction of the satellite antenna.

Flip covers for portable phones have generally been used to protect the keypad or display and has only extended over part of the phone base. In certain applications, though, a flip cover has been utilized to house an antenna (e.g., U.S. Patent 5,337,061, U.S. Patent 5,258,892, U.S. Patent 5,014,346, and U.S. Patent 5,170,173). As will be seen herein, each of the antennas disclosed in these patents is of a different construction than the satellite antenna of the present invention. Additionally, the mechanical coupling of the flip cover to the main housing in such patents involves rotation about a single axis between an open and a closed position.

Additional prior art pertinent to the claimed invention include D1 = EP-A- 0 631 400 and D2 = US-A-5 337 061. D1 discloses a dual mode portable digital radio transceiver for communicating via a terrestrial network in a first mode and via a satellite network in a second mode. The transceiver provides for communication in both modes using a single synthesized pure carrier, to carry out direct conversion in the first mode and intermediate frequency conversion followed by the same direct conversion in the second mode.

D2 discloses an antenna system within the body of a telephone handset having two antenna that can be switched without the need for additional components. A first antenna is mounted on a flap (2) and has a groundplane and an active monopole fed by a coaxial feed 6 from telephone electronic circuitry. The flap is pivotally connected to the main section of the telephone housing and can be folded down against the main section when not in use. A second antenna is fitted in the main section. Both of the antennae are connected to the transceiver circuitry via the same node. The two antennae are specially designed so as to introduce deliberate mismatch so as to provide an effective switching system between the two antenna without the need for separate circuit elements.

In light of the foregoing, a primary object of the present invention is to provide a portable phone which is able to operate in the dual modes of satellite and cellular communication.

Another object of the present invention is to provide an antenna system for a portable phone which is able to operate in the dual modes of satellite and cellular communication.

A further object of the present invention is to provide an antenna system for a portable phone operable in a satellite communication mode which has an improved gain/temperature ratio for better link margin.

These objects and other features of the present invention will become more readily apparent upon reference to the following description when taken in conjunction with the following drawing.

### SUMMARY OF THE INVENTION

In accordance with one aspect of the present invention, a portable phone capable of operating in cellular and satellite modes of communication is disclosed. The dual mode portable phone includes a main housing, circuitry located within the main housing for operating the portable phone in the cellular mode, circuitry located within the main housing for operating the portable phone in the satellite mode, a first antenna coupled to the cellular circuitry for receiving and transmitting signals in the cellular mode, and a second antenna coupled to the satellite circuitry for receiving and transmitting signals in the satellite mode. The second antenna being a patch antenna located along the rear portion of said main housing adjacent the top portion. The first antenna being a monopole antenna extending from the top portion of the main housing.

### BRIEF DESCRIPTION OF THE DRAWING

While the specification concludes with claims particularly pointing out and distinctly claiming the present invention, it is believed the same will be better understood from the following description taken in conjunction with the accompanying drawing in which:
Fig. 1 is a perspective view of a dual mode portable phone, where the flip cover is in a closed position;
Fig. 2 is a perspective view of the dual mode portable phone of Fig. 1, where the flip cover has been rotated partially open about a first axis;
Fig. 3 is a perspective view of the dual mode portable phone of Fig. 2, where the flip cover has been rotated partially sideways about a second axis;
Fig. 4 is a perspective view of the dual mode portable phone of Fig. 3, where the flip cover has been fully rotated about the first and second axes into the desired open position;
Fig. 5 is a front interior view of the flip cover for the dual mode portable phone depicted in Figs. 1-4;
Fig. 5A is a side view of the flip cover depicted in Fig. 5;
Fig. 6 is an exploded, partial perspective view of the dual mode portable phone of Figs. 1-4, including the hinge mechanism and universal joint used to couple the flip cover to the main housing;
Fig. 7 is a circuit diagram depicting the interface of the satellite antenna with the circuitry located within the main housing;
Fig. 8 is a side diagrammatic view of a dual mode portable phone having an antenna configuration according to the present invention.
Fig. 9 is a rear diagrammatic view of the dual mode portable phone of Fig. 8; and
Fig. 10 is a cross-sectional view of the satellite antenna depicted in Fig. 9.

### DETAILED DESCRIPTION OF THE INVENTION

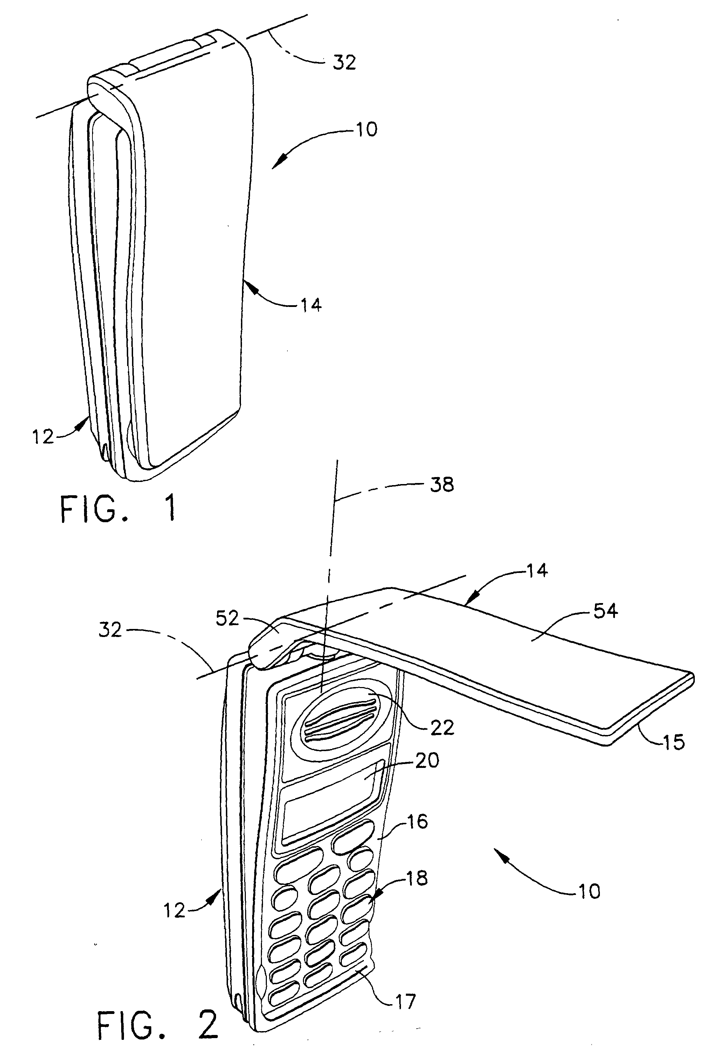

Referring now to the drawing in detail, wherein identical numerals indicate the same elements throughout the figures, Figs. 1-4 depict a handheld portable phone capable of operating in the dual modes of cellular and satellite communication and is indicated generally by the numeral 10. It will be seen that portable phone 10 includes a main housing 12 and preferably a flip cover 14 rotatably secured to main housing 12. Flip cover 14 is shown as being in the closed position in Fig. 1, where a distal end 15 thereof engages a receiving ledge 17 on a top surface 16 of main housing 12 so as to lie over substantially all of top surface 16. It will be noted from Figs. 2-4 that top surface 16 of main housing 12 offers access to a keypad 18, a display 20, and a speaker 22. Also, while not shown, it will be understood that main housing 12 includes circuitry therein enabling portable phone 10 to communicate in both the cellular and satellite modes of communication, such as that shown and described in a patent application entitled "Dual Mode Satellite/Cellular Terminal," U.S. Patent No. 5,812,539, which is owned by the assignee of the present invention.

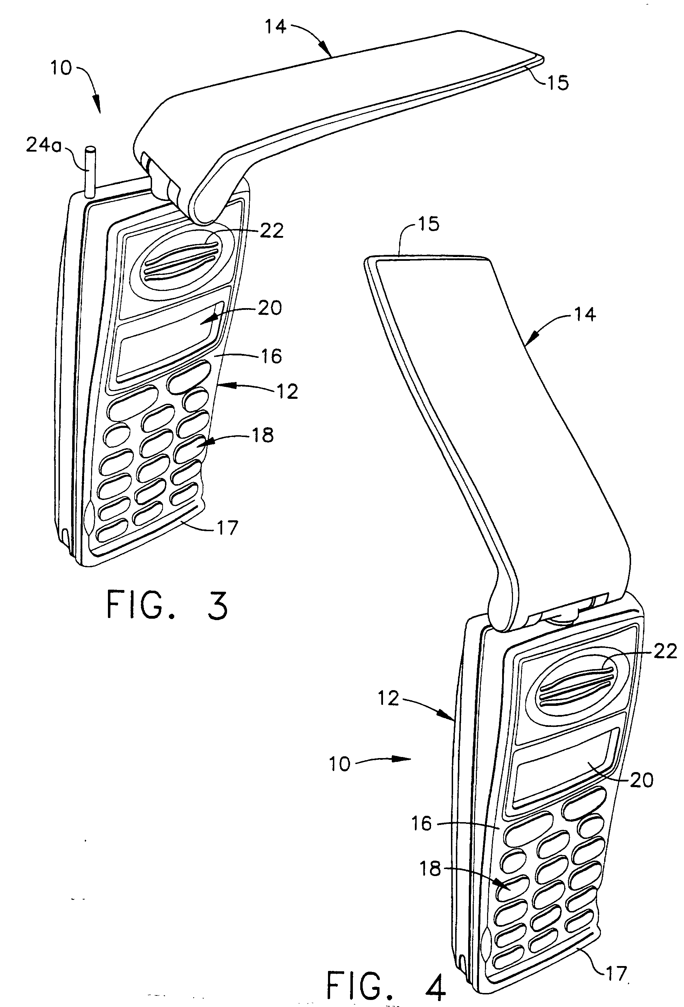

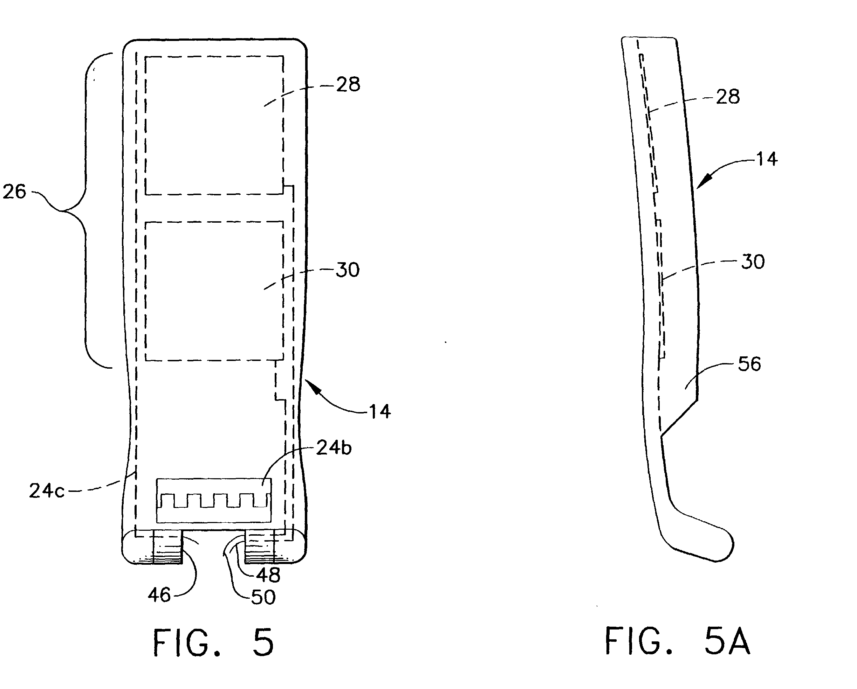

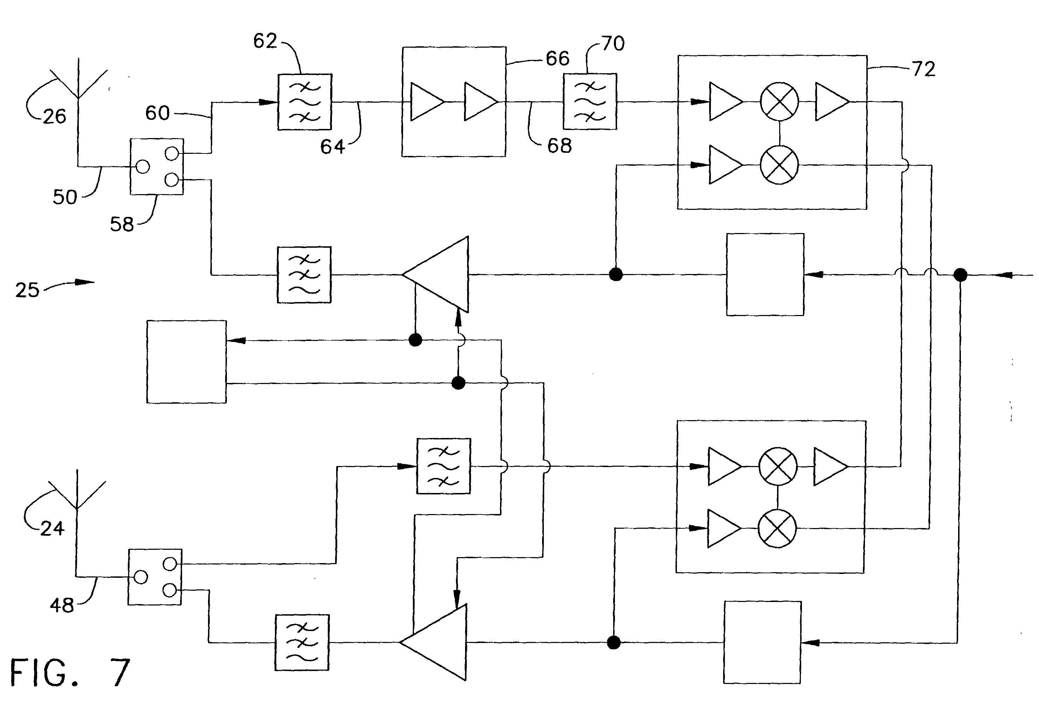

Portable phone 10 further includes a first antenna 24 coupled to the cellular circuitry in main housing 12 for receiving and transmitting signals in the cellular mode and a second antenna 26 coupled to the satellite circuitry in main housing 12 for receiving and transmitting signals in the satellite mode (see Figs. 7-9). Also included is interfacing circuitry for such second antenna 26, designated generally by the numeral 25, which is described in greater detail hereinafter. In the following and in figures 5-7 an antenna integration in the flip cover is described. Such an arrangement does not fall under the claims, but is considered as a useful example for the understanding of a further development. It is preferred that second antenna 26 (which is circularly polarized) be positioned within flip cover 14, whereas first antenna 24 (which is linearly polarized) is preferably a monopole type antenna which may extend from main housing 12 (see 24a in Fig. 3), be printed on an interior surface 19 of flip cover 14 (see 24b in Fig. 5), or be located within flip cover 14 adjacent second antenna 26 (see24c in Fig. 5). In any event, it is recognized that due to the differences in polarization, separate antennas are required in order to make the most efficient use of energy radiated therefrom.

As seen in Fig. 5, second antenna 26 is preferably comprised of a first patch antenna element 28 for transmitting signals to a satellite and a second patch antenna element 30 for receiving signals from a satellite, although a single patch antenna element (as seen with an alternate embodiment herein) may be utilized to perform both functions. The construction of flip cover 14 and the mounting of first and second patch antenna elements 28 and 30 is described in greater detail in a patent application filed concurrently herewith entitled "Flip Cover and Antenna Assembly for a Portable Phone," which is also owned by the assignee of the present invention. In order to minimize interference, first and second patch antenna elements 28 and 30 are tuned to separate frequency bandwidths of operation, depending on those available. Accordingly, it is preferred that first patch antenna element 28 transmit signals to a satellite within a first frequency bandwidth (e.g., approximately 1.626 to approximately 1.661 Gigahertz) and second patch antenna element 30 receive signals from a satellite within a second frequency bandwidth (e.g., approximately 1.525 to approximately 1.560 Gigahertz). It will be noted that each of the frequency bandwidths of operation for first and second patch antenna elements 28 and 30 are approximately .035 Gigahertz and are much higher than the normal operational frequency for the cellular mode of communication, which is approximately 900 Megahertz.

Since the satellite mode of communication involves a directional component, whereby link margin between portable phone 10 and an applicable satellite is improved when second antenna 26 is positioned in alignment therewith, an important aspect of the present invention is to provide a configuration in which second antenna 26 may be maneuvered into position without undue effort. Additionally, because the radiation to the user is to be minimized and the ratio of gain to temperature is directly related to link margin, it would be advantageous for second antenna 26 to be located away from the user of portable phone 10. By positioning first and second patch antenna elements 28 and 30 within flip cover 14, with transmitting patch antenna element 28 being located near flip cover distal end 15, each of these objectives are met.

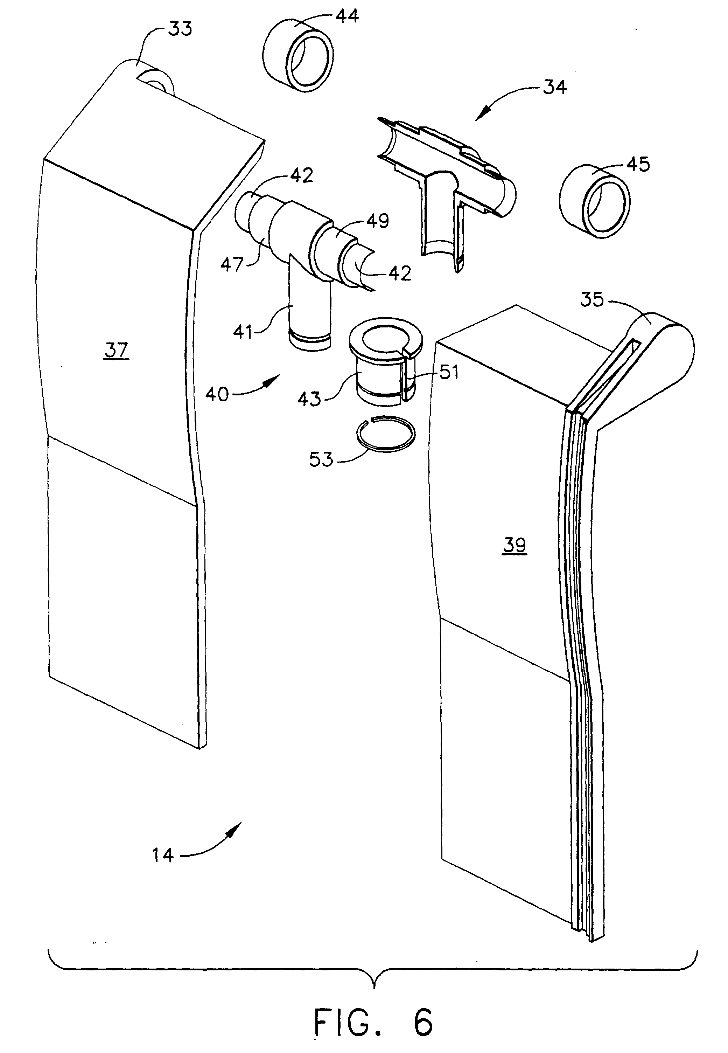

With respect to the coupling of flip cover 14 and main housing 12, it will be understood from Figs. 1 and 2 that flip cover 14 is rotatable about a first axis 32 between a closed position (i.e., at a 0° position) to a maximum open position as seen in Fig. 4 (i.e., at a 180° position). A hinge mechanism 34 is provided in order for flip cover 14 to be rotatable about first axis 32 (which is oriented longitudinally through hinge mechanism 34), and as best seen in Fig. 6 hinge mechanism 34 is preferably retained within first and second bearing caps 33 and 35 of flip cover end 36. It will be noted that first bearing cap 33 is associated with a first or outer flip cover housing 37 and second bearing cap 35 is associated with a second or inner flip cover housing 39 so that they are in alignment when first and second flip cover housings 37 and 39 are mated together. A shaft 42 is retained within first and second bearing caps 33 and 35 (which may include O rings at a stepped-down surface thereof), with first and second retainer rings 44 and 45 being provided on corresponding raised surfaces 47 and 49 positioned on shaft 42. A stop (not shown) may be provided in order to prevent the over-rotation of flip cover 14 about first axis 32.

Flip cover 14 is also rotatable about a second axis 38, which is substantially perpendicular to first axis 32. This is accomplished by means of a universal joint 40 coupled to hinge mechanism 34 (second axis 38 being a centerline through universal joint 40). As seen in Fig. 6, a male portion 41 of universal joint 40 is associated with shaft 42 of hinge mechanism 34 and it is mated with a female portion 43 of universal joint 40 retained in main housing 12. It will be noted that female portion 43 has a longitudinal slot 51 which allows it to expand when male portion 41 is inserted therein. After male portion 41 engages female portion 43 by means of respective detents, a clip ring 53 is positioned around female portion 43 to hold male portion 41 in place. Flip cover 14 is rotatable about second axis 32 in either direction a maximum amount (preferably from 0° to +180° or 0° to -180°), which may be enforced by one or more stops. Of course, to enable male portion 41 to extend through flip cover end 36 for rotation about second axis 38, a slotted portion 46 is included in flip cover 14 at end 36. It will also be noted that a minimum amount of rotation must occur about first axis 32 through hinge mechanism 34 (at least 90°) before flip cover 14 will be able to rotate about second axis 38 through universal joint 40.

In order to couple first and second patch antenna elements 28 and 30 of second antenna 26 with the applicable circuitry contained within main housing 12, shaft 42 and male and female portions 41 and 43 of universal joint 40 preferably are hollow so that a pair of leads 48 and 50 may extend therethrough and traverse hinge mechanism 34. Permitting only the maximum amount of rotation about universal joint 40 is important in this regard in order to limit the bending stresses on leads 48 and 50.

It will also be seen from Figs. 1-4 that flip cover 14 preferably includes a first substantially planar section 52 located adjacent end 36 which couples to main housing 12 and a second substantially planar section 54 oriented at an angle to first section 52. This orientation between first and second sections 52 and 54 permits second section 52 to lie over top surface 16 of main housing 12. Additionally, it will be noted that flip cover 14 may include a flange 56 extending from the perimeter of second flip cover section 54 which wraps around the corresponding edges of main housing 12.

As stated previously herein, first and second antennas 24 and 26 are connected to the operating circuitry within main housing 12 by means of leads 48 and 50, respectively, and interfacing circuitry 25 (see Fig. 7). Most of interfacing circuitry 25 has been utilized previously with respect to previous cellular portable phones sold by the assignee of the present invention, and indeed one goal is to use as much of such circuitry as possible. Thus, only the portion of interfacing circuitry 25 relating to second antenna 26 will be discussed.

It will be seen that a PIN diode type T/R switch 58 receives lead 50 and connects second antenna 26 to the receiver input. A signal 60 is routed through a first receive bandpass filter 62 which provides blocking of out-of-band interference. Preferably, filter 62 is a three-pole dielectric filter to meet the selectivity requirements placed on a system operating at L-band. A low noise amplifier 66 implemented in two stages then provides gain to a signal 64 on the order of 30 dB with a noise figure of approximately 1 dB. Output 68 from low noise amplifier 66 is routed through an image reject filter 70 to an ASIC 72 which performs heterodyning to the first IF. This is the first common signal point shared with GSM mode circuitry normally utilized within assignee's cellular phones. Of course, it will be understood that the aforementioned description relates to a single patch antenna element and that use of separate patch antenna elements 28 and 30 for transmitting and receiving eliminates the need for T/R switch 58 (and the corresponding insertion loss applicable thereto), although this improvement is subject to losses stemming from additional connectors and circuit lines.

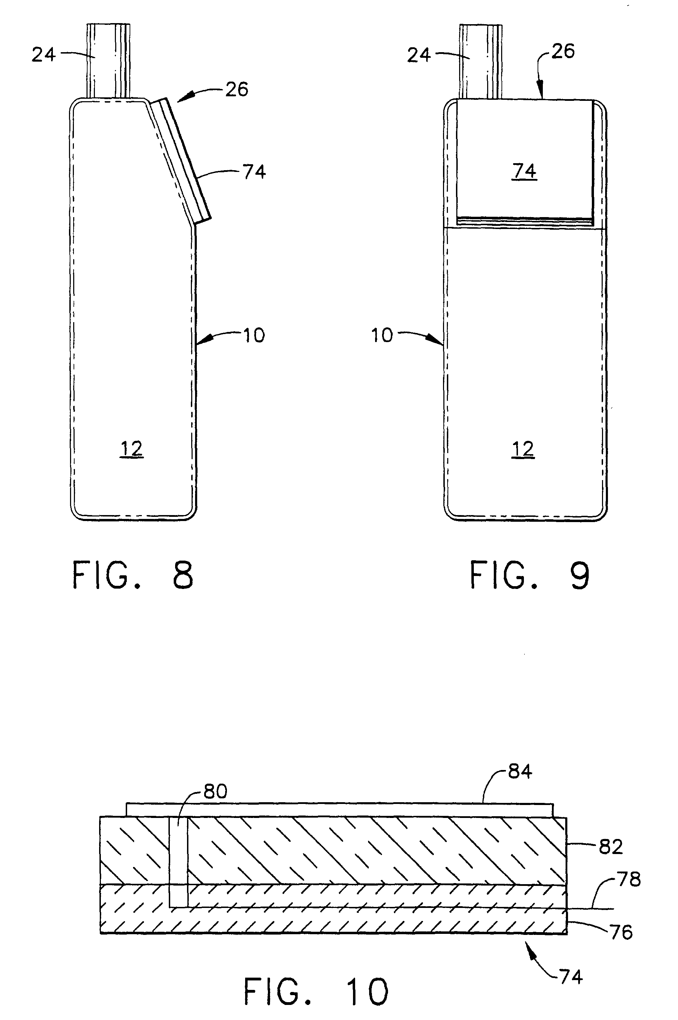

According to the invention portable phone 10 involves the application of second antenna 26 directly onto main housing 12 as seen in Figs. 8 and 9. Accordingly, there is no need for a flip cover or the manipulations thereof as described previously herein. While some advantages are gained from this embodiment in a mechanical sense, it has been found that as much as 1 dB of loss occurs with this configuration and it is therefore undesirable from an electrical standpoint.

Nevertheless, it will be seen in Fig. 10 that a single patch antenna element 74 includes a feed substrate 76 positioned adjacent a rear surface of main housing 12, a dielectric substrate 82 positioned over feed substrate 76, and a radiating element 84 positioned over dielectric substrate 82. A feed trace 78 is provided to connect radiating element 84 with the circuitry in main housing 12 at a feed point 80. Such single patch antenna element can then be used to both transmit and receive signals in the satellite mode.

Having shown and described the preferred embodiments of the invention, further adaptations of the dual mode portable phone and the antenna system therefor disclosed herein can be accomplished by one of ordinary skill in the art without departing from the scope of the invention. In particular, it will be understood that the concepts relating to second antenna 26 herein are just as applicable for a portable phone operable in only the single mode of satellite communication. Additionally, flip cover 14 may be mounted to main housing 12 in any manner that would permit rotation about two separate axes. For example, flip cover 14 may be mounted indirectly to main housing 12 by means of a support bracket such as that described in a patent application filed concurrently herewith entitled "A Detachable Flip Cover Antenna Assembly," which is owned by the assignee of the present invention.

## Claims

1. A portable phone (10) capable of operating in cellular and satellite modes of communication, comprising:
(a) a main housing (12) having a top portion, a bottom portion, a front portion, and a rear portion;
(b) circuitry (25) located within said main housing for operating said portable phone in said cellular mode;
(c) circuitry (25) located within said main housing for operating said portable phone in said satellite mode;
(d) a first antenna (24) coupled to said cellular circuitry for receiving and transmitting signals in said cellular mode; and
(e) a second antenna (26) coupled to said satellite circuitry for receiving and transmitting signals in said satellite mode,
said portable phone being characterized by:
said first antenna (24) being a monopole antenna and extending from said top portion of said main housing; and
said second antenna (26) being a patch antenna located along said rear portion of said main housing adjacent said top portion.

2. The portable phone of claim 1, said second antenna further comprising a single patch antenna element (74) for receiving signals from and transmitting signals to a satellite.

3. The portable phone of claim 2, said single patch antenna element (74) further comprising:
(a) a feed substrate (76) positioned adjacent said main housing (12);
(b) a dielectric substrate (82) positioned over said feed substrate (76);
(c) a radiating element (84) positioned over said dielectric substrate (82); and
(d) a feed trace (78) extending from said satellite circuitry through said feed (76) and dielectric substrates (82) at a feed point (80) to connect with said radiating elements (84).

4. The portable phone of claim 1, said second antenna further comprising:
(a) a first patch antenna (28) element for receiving signals from a satellite; and
(b) a second patch antenna element (30) for transmitting signals to a satellite.

5. The portable phone of claim 1, wherein said cellular circuitry operates at a frequency of approximately 900 Megahertz.

6. The portable phone of claim 1, wherein said satellite circuitry operates within a frequency band of approximately 1.0 to 30.0 Gigahertz.

## Patentansprüche

1. Tragbares Telefon (10), das in Zellular- und Satelliten-Kommunikationsmoden arbeiten, kann, umfassend:
(a) ein Hauptgehäuse (12) mit einem oberen Abschnitt, einem unter Abschnitt, einem vorderen Abschnitt und einem hinteren Abschnitt;
(b) eine Schaltungsanordnung (25), die innerhalb des Hauptgehäuses zum Betreiben des tragbaren Telefons in dem Zellularmodus angeordnet ist;
(c) eine Schaltungsanordnung (25), die innerhalb des Hauptgehäuses für einen Betrieb des tragbaren Telefons in dem Satellitenmodus angeordnet ist;
(d) eine erste Antenne (24), die mit der Zellular-Schaltungsanordnung zum Empfangen und Senden von Signalen in dem Zellularmodus gekoppelt ist; und
(e) eine zweite Antenne (26), die mit der Satelliten-Schaltungsanordnung zum Empfangen und Senden von Signalen in dem Satellitenmodus gekoppelt ist,
wobei das tragbare Telefon dadurch **gekennzeichnet ist, dass:**
die erste Antenne (24) eine Monopol-Antenne ist und sich von dem oberen Abschnitt des Hauptgehäuses erstreckt; und
die zweite Antenne (26) eine Patchantenne ist, die entlang des hinteren Abschnitts des Hauptgehäuses benachbart zu dem oberen Abschnitt angeordnet ist.

2. Tragbares Telefon nach Anspruch 1, wobei die zweite Antenne ferner ein einzelnes Patchantennen-Element (74) zum Empfangen von Signalen von und zum Senden von Signalen an einen Satelliten umfasst.

3. Tragbares Telefon nach Anspruch 2, wobei das einzelne Patchantennen-Element (74) ferner umfasst:
(a) ein Zuführungssubstrat (76), welches benachbart zu dem Hauptgehäuse (12) positioniert ist;
(b) ein dielektrisches Substrat (82), welches über dem Zuführungssubstrat (76) positioniert ist;
(c) ein Abstrahlelement (84), welches über dem dielektrischen Substrat (82) positioniert ist; und
(d) eine Zuführungsspur (78), die sich von der Satelliten-Schaltungsanordnung über die Zuführung (76) und die dielektrischen Substrate (82) an einem Zuführungspunkt (80) erstrecken, um eine Verbindung mit den Abstrahlelementen (84) herzustellen.

4. Tragbares Telefon nach Anspruch 1, wobei die zweite Antenne ferner umfasst:
(a) ein erstes Patchantennen-(28)-Element zum Empfangen von Signalen von einem Satelliten; und
(b) ein zweites Patchantennen-Element (30) zum Senden von Signalen an einen Satelliten.

5. Tragbares Telefon nach Anspruch 1, wobei die Zellular-Schaltungsanordnung bei einer Frequenz von ungefähr 900 Megahertz arbeitet.

6. Tragbares Telefon nach Anspruch 1, wobei die Satelliten-Schaltungsanordnung innerhalb eines Frequenzbands von ungefähr 1,0 bis 30,0 Gigahertz arbeitet.

## Revendications

1. Téléphone portatif (10) capable de fonctionner en modes cellulaire et satellite de transmission, comprenant :
(a) un boîtier principal (12) comportant une partie supérieure, une partie inférieure, une partie avant et une partie arrière ;
(b) des circuits (25) situés à l'intérieur dudit boîtier principal pour mettre en oeuvre ledit téléphone portatif dans ledit mode cellulaire ;
(c) des circuits (25) situés à l'intérieur dudit boîtier principal pour mettre en oeuvre ledit téléphone portatif dans ledit mode satellite ;
(d) une première antenne (24), raccordée auxdits circuits cellulaires, destinée à recevoir et à émettre des signaux dans ledit mode cellulaire ; et
(e) une seconde antenne (26), raccordée auxdits circuits satellites, destinée à recevoir et à émettre des signaux dans ledit mode satellite ;
ledit téléphone portatif étant caractérisé :
en ce que ladite première antenne (24) est une antenne unipolaire et s'étend à partir de ladite partie supérieure dudit boîtier principal ; et
en ce que ladite seconde antenne (26) est une antenne plaque située le long de ladite partie arrière dudit boîtier principal adjacente à ladite partie supérieure.

2. Téléphone portatif selon la revendication 1, ladite seconde antenne comprenant en outre un unique élément (74) d'antenne plaque, destiné à recevoir des signaux d'un satellite et à émettre des signaux vers celui-ci.

3. Téléphone portatif selon la revendication 2, ledit unique élément (74) d'antenne plaque comprenant en outre :
(a) un substrat (76) d'alimentation placé adjacent audit boîtier principal (12) ;
(b) un substrat diélectrique (82) placé sur ledit substrat (76) d'alimentation ;
(c) un élément rayonnant (84) placé sur ledit substrat diélectrique (82) et
(d) un ruban (78) d'alimentation s'étendant depuis lesdits circuits satellites en passant par lesdits substrats d'alimentation (76) et diélectrique(82), au niveau d'un point (80) d'alimentation pour se connecter avec lesdits éléments rayonnants (84).

4. Téléphone portatif selon la revendication 1, ladite seconde antenne comprenant en outre :
(a) un premier élément d'antenne plaque (28) destiné à recevoir des signaux d'un satellite ; et
(b) un second élément (30) d'antenne plaque destiné à émettre des signaux vers un satellite.

5. Téléphone portatif selon la revendication 1, dans lequel lesdits circuits cellulaires opèrent à une fréquence d'environ 900 mégahertz.

6. Téléphone portatif selon la revendication 1, dans lequel lesdits circuits satellites opèrent à l'intérieur d'une bande de fréquences d'environ 1,0 à 30,0 gigahertz.
